# EUROPEAN PATENT SPECIFICATION

(11) **EP 4 117 957 B1**
(45) Date of publication and mention of the grant of the patent: **20.05.2026**
(21) Application number: 21710629.3
(22) Date of filing: 04.03.2021
(51) Int. Cl.: B60L 53/67, B60L 53/63

(54) **METHOD AND SYSTEM FOR ALLOCATING CHARGING RESOURCES TO A PLURALITY OF CHARGING STATIONS**
VERFAHREN UND SYSTEM ZUR ZUWEISUNG VON LADERESSOURCEN AN MEHRERE LADESTATIONEN
PROCÉDÉ ET SYSTÈME POUR ATTRIBUER DES RESSOURCES DE CHARGE À UNE PLURALITÉ DE STATIONS DE CHARGE

(30) Priority: 11.03.2020 NL 2025100
(43) Date of publication of application: 18.01.2023
(73) Proprietor: Greenflux Assets B.V., 1092 AD Amsterdam (NL)
(72) Inventor: DE BOER, Johannes André, 1092 AD Amsterdam (NL); SPOELSTRA, Nico, 1092 AD Amsterdam (NL); VERHEIJEN, Lennart Frans, 1092 AD Amsterdam (NL)
(74) Representative: De Vries & Metman
(86) International application number: PCT/NL2021/050150
(87) International publication number: WO 2021/182948

(56) References cited:
- WO-A1-2013/100764
- WO-A1-2017/011373
- DE-A1- 102010 040 395
- US-A1- 2012 091 972
- US-A1- 2014 266 039

## Description

### FIELD OF THE INVENTION

This disclosure relates to a method and system for allocating charging resources to a plurality of charging stations. In particular to such method and system wherein priority levels and priority sublevels are determined for electric vehicle charging stations.

### BACKGROUND

EP3213954A2 discloses a charging apparatus for electrically powered vehicles. A controller of the charging apparatus is described to classify the electrically-powered vehicles into first to fourth groups based on states of charge (SOCs). Specifically, an SOC of the first group is set to be lower than 25%. An SOC of the second group is set to be 25% or higher and lower than 50%. An SOC of the third group is set to be 50% or higher and lower than 80%. An SOC of the fourth group is set to be 80% or higher. Subsequently, the controller determines charge current for each electrically-powered vehicle based on the classification result and a weight coefficient previously set for each group.

A disadvantage of this charging apparatus is that it is not suitable for situations wherein relatively many electrically-powered vehicles are to be charged. Therefore, there is a need in the art for improved method and system for allocating charging resources to charging stations.

WO2013/100764 A1 discloses a method for distributing power to electric charging installations that assigns priorities to individual charging installations and re-evaluates the priorities in time.

### SUMMARY

To that end, a method is disclosed for allocating charging resources, e.g. amperes, to a plurality of electric vehicle charging stations. The method comprises a step (i) of determining a priority level for each electric vehicle charging station of the plurality of electric vehicle charging stations. Thus a first group of one or more electric vehicle charging stations associated with a first priority level is determined as well as a second group of one or more electric vehicle charging stations associated with a second priority level. Of course, more than two groups may be determined, such as three, four, five, six, seven, eight, nine or ten, or even more, wherein each group would be associated with another priority level. As used herein, a group of one or more charging stations may be understood to be formed by charging stations having the same priority level. Such group may also be referred to as a priority group. The first priority level is higher than the second priority level.

The method further comprises a step (ii) of determining a priority sublevel for each of the one or more electric vehicle charging stations in the second group. Thus, an order of priority is determined for the one or more electric vehicle charging stations in the second group. Preferably, a priority sublevel for each of the one or more electric vehicle charging stations in the first group is determined as well. Preferably, a different priority sublevel is determined for each electric vehicle charging station within a priority group of one or more electric vehicle charging stations.

The method further comprises a step (iii) of allocating charging resources to the plurality of electric vehicle charging stations in accordance with the applicable priority levels and priority sublevels. In this step, one or more disadvantaged electric vehicle charging stations in the second group are allocated limited charging resources, for example no charging resources at all. For these disadvantaged charging stations a priority sublevel lower than a threshold priority sublevel has been determined.

The method further comprises a step (iv) of updating priority sublevels for the electric vehicle charging stations in the second group. Thus, an updated order of priority is determined for the one or more electric vehicle charging stations in the second group. This step may be performed periodically and/or may be triggered by the occurrence of predetermined events. In this step, higher priority sublevels are determined for the disadvantaged electric vehicle charging stations in the second group than for electric vehicles in the second group that had a priority sublevel equal to or higher than said threshold priority sublevel before this updating step.

The method further comprises a step (v) of allocating charging resources to the plurality of electric vehicle charging stations in accordance with the applicable priority levels and priority sublevels.

With the method as described in EP3213954A2, if two or more electrically-powered vehicles belong to the same group, they are charged evenly. This becomes problematic when relatively many electric vehicles are present in a group while relatively limited charging resources are available for such a group. In this case, the amount of charging resources may become very low. To illustrate, if the maximum charge current for a group is 100 amperes ("100A") and this group comprises 20 electric vehicles, then only 5A can be allocated to each electric vehicle. However, electric vehicles can show undesired behaviour if such a low charge current is allocated to them. Typically, electric vehicles will not charge at all if the provided current is less than a certain minimum current, for example because such electric vehicles require a relatively high reactive current for charging. Non-limiting examples of such minimum current are 6A, 13A. It should be appreciated that such minimum current may depend on the type of electric vehicle that is charged by the charging station, but additionally or alternatively on the type of power distribution network to which the charging station is connected. To illustrate, if a charging station is connected to a single phase network, as for example present in the US, UK or Asia, then the minimum may be approximately 8A. For other types of power distribution networks, such as three phase power distribution network, 13A may be the minimum current.

The method as disclosed herein enables to prevent such problems, since it not only comprises determining a priority level for each electric vehicle charging station, but also, within a priority level, a priority sublevel for each electric vehicle charging station. This enables to treat electric vehicle charging stations with different priorities even if they are associated with the same priority level. As a result, a minimum amount of charging resources can be allocated, in order of priority, to each electric vehicle charging station. If the allocatable amount of charging resources is depleted, then some remaining, disadvantaged charging stations will not receive any charge allocation. This allocation scheme prevents that very small amounts of charging resources are allocated to a charging station, which may cause the above-described problems. In order to prevent that the same charging stations within a priority level will repeatedly belong to the disadvantaged group of electric vehicles, the priority sublevels are updated. In this update, the electric vehicles to which no charging resources were allocated previously, receive a higher priority sublevel, which increases the probability that resources will be allocated to them in a next round of resource allocation.

Allocating charging resources to the plurality of electric vehicle charging stations in accordance with the applicable priority levels and priority sublevels may be understood to determine a group of fortunate electric vehicle charging stations and a group of disadvantaged charging stations. The fortunate charging stations may be understood to be formed by the charging stations that are allocated charging resources, which means that the fortunate charging stations that belong to the second group have a priority sublevel that is equal to or higher than said threshold priority sublevel. The disadvantaged electric vehicle charging station may be understood to be formed by the charging stations to which only limited, e.g. no, charging resources are allocated. The disadvantaged electric vehicle charging stations have a priority sublevel lower than the threshold priority sublevel. The fortunate electric vehicle charging station in the second group have a priority sublevel equal to or higher than the threshold priority sublevel. The respective amounts of charging resources that are allocated to the fortunate electric vehicle charging stations are not limited, which may be understood as that the ratio between allocated amount of charging resources and desired amount of charging resources is higher than a threshold value, such as higher than 40%, 50%, 60%, 70%, 80% or 90%.

Allocating charging resources to an electric vehicle charging station may be understood as allocating charging resources to an electric vehicle that is connected to the charging station. The priority level for a charging station may be determined based on a state of charge of an electric vehicle's battery that is connected to the charging station. High resp. low state of charge of a battery may refer to a state of the battery that is charged to a high resp. low extent. In an example, higher priority levels are determined for charging stations that are connected to electric vehicle batteries with lower state of charge.

In an embodiment, the method comprises obtaining one or more meter values indicative of the charging resources, e.g. charging current, provided by a charging station to an electric vehicle connected to the charging station at respective times. Such embodiment may comprise determining that the electric vehicle consumes less charging resources than allocated to it. Based on this determination, the electric vehicle charging station may be alleviated to a lower priority group. An electric vehicle consuming less resources than allocated may namely be indicative of the one or more batteries of the electric vehicles being almost fully charged. Additionally or alternatively, such embodiment may comprise determining a state of charge of the electric vehicle based on the meter values. This embodiment is advantageous in that the electric vehicle does not have to construct and transmit a message explicitly indicating the state of charge of its one or more batteries.

The priority levels and priority sublevels of the charging stations may be understood to define an order of priority, wherein the charging stations in a higher priority level group come before the charging stations in a lower priority level group and wherein the order of priority within a priority level group is such that a charging station with a higher priority sublevel comes before a charging station in the same group with a lower priority sublevel.

Charging resources may be understood to refer to an amount of electrical power and/or amount of amperes. As used herein, limited charging resources may be understood as less charging resources than desired, for example less than the maximum charge rate of a charging station or electric vehicle connected to a charging station, and/or may be understood as no charging resources at all, e.g. 0 amperes, 0A. A charging station being allocated limited charging resources may also be understood as that the ratio between the allocated amount of charging resources to the charging station and the desired amount of charging resources for the charging station is less than a threshold value, such as less than 90%, 80%, 70%, 60%, 50%, or 40%. The definition of being allocated limited charging resources may in principle be different for each electric vehicle or charging station.

The methods described herein are preferably computer-implemented methods.

In an embodiment, allocating the charging resources to the plurality of charging stations comprises determining for each charging station a maximum amount of charging resources that will be provided to the charging station. As such, allocating charging resources to a charging station may be understood to assign a certain capacity that may or may not be fully used.

In an example, the determined maximum amount of charging resources is transmitted to the charging station and/or to the electric vehicle connected to the charging station as part of a charging profile. The electric vehicle and/or charging station may comprise a controller that is configured to keep the charging resources, e.g. the charge current, that are actually provided to the electric vehicle below the maximum amount of charging resources.

In an embodiment, allocating charging resources to the plurality of charging stations in accordance with the determined priority levels comprises treating each electric vehicle charging station in the first group with higher priority than any electric vehicle in the second group and treating the electric vehicles in the second group with a priority in accordance with their respective determined priority sublevels.

In an embodiment, the method comprises, after step (iii), updating priority levels for electric vehicle charging stations out of the plurality of electric vehicle charging stations thus updating the first and second group of electric vehicle charging stations.

A priority level update for a charging station can be caused by the state of charge of the electric vehicle's battery connected to the charging station reaching a particular value. Additionally or alternatively, a priority level update for a charging station may be caused by certain events, such as an electric vehicle connecting or disconnecting from the charging station and/or a communication connection between the charging station and a control system being lost and/or a user indicating to be in a hurry via an application. Such application may be a smart phone application. In another example, such application may be installed in the vehicle in which the application can for example receive user instructions via a user interface present on or in the vehicle's dashboard.

In case, a priority level for a charging station is changed to the second priority level and thus assigned to the second group, then this charging station may receive the highest priority sublevel in the second group. More generally formulated, it could be that if a priority level for a charging station is changed to a particular priority level and thus assigned to a particular priority group, then this charging station may receive the highest priority sublevel in this particular group.

In an embodiment, the method comprises determining a priority sublevel for each of the one or more electric vehicle charging stations in the first group thus determining an order of priority for the one or more electric vehicle charging stations in the first group. In case more than two groups associated with respective priority levels are determined, such as three, four, five, six, seven, eight, nine or ten groups, then for each group, priority sublevels may be determined for the charging stations contained in it. Such determination and/or update of priority sublevels in each group may be performed similarly as described herein for the second group. The priority sublevels in such groups may influence the charging resource allocation similarly as described herein for the second group of charging stations.

In an embodiment, the method comprises repeating steps (iv) and (v) described herein. It should be appreciated that performing step (v) may comprise allocating limited charging resources to one or more disadvantaged electric vehicle charging stations in the second group for which a priority sublevel lower than a threshold priority sublevel have been determined. In each iteration comprising steps (iv) and (v), the group of one or more disadvantaged electric vehicles may change. Similarly, in each iteration, the value of the threshold priority sublevel may be different or the same.

In case priority sublevels for charging stations in one or more other priority groups have been determined, for example for the charging station in the first group, then it could be that the first group already contains one or more disadvantaged electric vehicle charging stations. Typically, in such case, the second group only comprises disadvantaged electric vehicle charging stations.

Depending on the allocatable amount of charging resources, neither the first nor second group may contain disadvantaged electric vehicle charging stations, but another group, for example a third group may indeed comprise one or more disadvantaged electric vehicle charging stations.

The steps (iv) and (v) may be repeated once or multiple times. The steps (iv) and (v) may be repeated at predetermined time intervals, such as once every fifteen minutes. The predetermined time interval for example has a duration between 2 minutes and 60 minutes.

In an embodiment, steps (iv) and (v) are repeated based on detection of an event. Such event for example relates to a start or stop of a charging session and/or new meter values and/or a change in the allocatable amount of charging resources, reception of a user request and/or a number of charging stations going offline and/or the elapse of a certain time interval in which no events occurred. A meter value as used herein may be understood to be indicate a current consumed by the charging station for charging the electric vehicle connected to it and/or a voltage applied by the charging station over one or more batteries of the electric vehicle.

In an embodiment, the method comprises causing charging resources to be provided to the plurality of electric vehicle charging stations in accordance with the allocated charging resources. Providing charging resources to a charging station in accordance with allocated charging resources to this charging station may be understood to comprise providing the charging resources to the charging station such that the provided charging resources do not exceed the allocated charging resources.

In an embodiment, step (ii) comprises determining a first particular priority sublevel for a first particular electric vehicle charging station in the second group and determining a second particular priority sublevel for a second particular electric vehicle charging station in the second group. The first particular priority sublevel is higher than the second particular sublevel. Further, both the first particular priority sublevel and second particular priority sublevel are lower than said threshold priority sublevel, so that the first and second particular charging station will be allocated only limited charging resources. In this embodiment, step (iv) comprises determining a higher priority sublevel for the first particular electric vehicle charging station than for the second particular electric vehicle.

It should be appreciated that the threshold priority sublevel follows from the step of allocating charging resources, because only after this step it becomes clear which charging stations receive limited charging resources. Thus, in the above embodiment, when the first and second particular priority sublevel are determined, the threshold priority sublevel is not known yet. Thus, in the above embodiment, both the first particular priority sublevel and second particular priority sublevel are lower than what will turn out to be the threshold priority sublevel.

Preferably, the mutual order of priority for the disadvantaged electric vehicle charging stations is maintained when performing an update of the priority sublevels in a particular priority group, such as the first and/or second group. This may be understood as follows. If any particular charging station out of the disadvantaged charging stations had a lower priority sublevel than any charging station belonging to a first set of one or more charging stations out of the disadvantaged charging stations and a higher priority sublevel than any charging station belonging to a second set of one or more charging stations out of the disadvantaged charging stations, then, after updating the priority sublevels, said particular charging station will still have a lower priority sublevel than any charging station belonging to the first set and still belonging to the particular priority group, and will still have a higher priority sublevel than any charging station belonging to the second set and still belonging to the particular priority group.

In an embodiment, step (ii) comprises determining a third particular priority sublevel for a third particular electric vehicle charging station in the second group and determining a fourth particular priority sublevel for a fourth particular electric vehicle charging station in the second group. The third particular priority sublevel is higher than the fourth particular sublevel. Further, both the third particular priority sublevel and fourth particular priority sublevel are equal to or higher than or equal to said threshold priority sublevel so that indeed charging resources will be allocated to the third and fourth particular charging station. In this embodiment, step (iv) comprises determining a higher priority sublevel for the third particular electric vehicle charging station than for the fourth particular electric vehicle.

Similarly as for the disadvantaged electric vehicle charging stations, the mutual order of priority for the fortunate electric vehicle charging stations is maintained when performing an update of the priority sublevels in the first and/or second group.

Thus, in each iteration, the priority sublevels may be cyclically assigned to the electric vehicle stations.

In an embodiment, the method comprises receiving a user request comprising an indication of a particular electric vehicle charging station. Then, based on the user request, the first priority level is determined for the particular electric vehicle charging station thus assigning the particular electric vehicle charging station to the first group of one or more electric vehicle charging stations. This embodiment allows a user to control the priority level of a charging station. For example, the owner of an electric vehicle can control the priority level of the charging station to which his electric vehicle is connected.

In an embodiment, the method comprises obtaining an allocatable amount of charging resources for the plurality of electric vehicle charging stations. This embodiment further comprises obtaining for each electric vehicle charging station out of the plurality of electric vehicle charging stations, a desired amount of charging resources. The applicable priority levels and priority sublevels define an order of priority for the plurality of electric vehicle charging stations. In this embodiment, allocating charging resources to the plurality of electric vehicle charging stations in accordance with the applicable priority levels and priority sublevels comprises allocating, in order of priority, the desired amount of charging resources to each electric vehicle charging station until substantially the allocatable amount has been allocated.

The desired amount of charging resources is for example the highest current that the charging station has provided to the electric vehicle during the charge session so far.

In case the remaining allocatable amount drops below a minimum amount which should be at least allocated to a charging station if resources are allocated to the charging station, then substantially the allocatable amount may be understood to have been allocated. To illustrate, if the allocatable amount is 110A and the first group contains one charging station having a desired amount of 20A and the second group contains six charging station each having a desired amount of 20A, then after 20A has been allocated to the charging station in the first group and the 80A has been allocated in total to the first four charging station in the second group, then in total 100A has been allocated and 10A remains. However, since in this example, each charging station should at least receive 13 A, 100 A may be understood to be substantially the allocatable amount.

In an embodiment, obtaining the allocatable amount of charging resources comprises determining the allocatable amount based on a current time. This may be advantageous in that it allows to adequately react to a varying allocatable amount in a simple manner. The allocatable amount may vary throughout time in a known manner. The allocatable amount of charging resources could be determined by a predefined known pattern and/or by a steering signal from a third party system (e.g. a grid operator) and/or based on real time measurements.

In an embodiment, each of the electric vehicle charging stations is associated with a minimum amount of to be allocated charging resources. Such embodiment may comprise allocating to each electric vehicle charging station either substantially zero, e.g. no charging resources, or an amount of charging resources that is equal to or higher than its associated minimum amount of to be allocated charging resources.

This embodiment is beneficial in that it allows the allocated amount of charging resources to any electric vehicle charging station to be higher than a minimum amount of charging resources. As explained above, allocating too small amounts of charging resources to a charging station may cause problems.

It should be appreciated that a generic minimum amount of to be allocated charging resources may be defined for all electric vehicle charging stations without specific reference to particular electric vehicle charging stations. In such case, each of the electric vehicle charging station should be understood to be associated with the generic minimum amount of to be allocated charging resources.

Some or all of the charging stations may be associated with their own individual minimum amount of to be allocated charging resources.

Such embodiment may comprise a step of determining that a remaining allocatable amount is less than said minimum amount of to be allocated charging resources and, based on this determination, refraining from allocating said remaining allocatable amount.

One embodiment comprises obtaining an allocatable amount of charging resources for the plurality of electric vehicle charging stations. This embodiment further comprises obtaining for each electric vehicle charging station out of the plurality of electric vehicle charging stations, a desired amount of charging resources. In this embodiment, the applicable priority levels and priority sublevels define an order of priority for the plurality of electric vehicle charging stations, wherein in the order of priority a particular electric vehicle charging station is preceded by a set of one or more electric vehicle charging stations. Further, a sum of the respective desired amounts of charging resources for the set of one or more electric vehicle charging stations is lower than the allocatable amount. Also, a difference between the allocatable amount and said sum is less than the minimum amount of to be allocated charging resources associated with said particular electric vehicle charging station. In this embodiment, the method comprises for at least one charging station out of the set of one or more electric vehicle charging stations, allocating less charging resources to it than its desired amount. This embodiment further comprises allocating to the particular electric vehicle charging station at least the minimum amount of to be allocated charging resources associated with the particular electric vehicle charging station. The particular charging station may be understood to be the next in line charging station in the order of priority after said set of one or more electric vehicle charging stations.

In such embodiment, the set of one or more charging stations may comprise at least two charging stations, charging station x and charging station y, wherein, in the order of priority, charging station x comes before charging station y, and wherein charging station y is allocated less resources than it desires and charging station x is allocated its desired amount of charging resources. Optionally, charging station y is allocated its associated minimum amount of charging resources. Thus, the to be added amount of charging resources to the particular charging station in order to enable allocation of the minimum amount may be taken from lower priority charging stations in the set of one or more charging station rather than from higher priority charging station in the set of one or more charging stations.

One aspect of this disclosure relates to a method for allocation charging resources to a plurality of electric vehicle charging stations. The method comprises obtaining an allocatable amount of charging resources for the plurality of electric vehicle charging stations. This method further comprises obtaining for each electric vehicle charging station out of the plurality of electric vehicle charging stations, a desired amount of charging resources. The method also comprises obtaining, e.g. determining, an order of priority for the plurality of electric vehicle charging stations, wherein in the order of priority a particular electric vehicle charging station is preceded by a set of one or more electric vehicle charging stations. Further, a sum of the respective desired amounts of charging resources for the set of one or more electric vehicle charging stations is lower than the allocatable amount. Also, a difference between the allocatable amount and said sum is less than the minimum amount of to be allocated charging resources associated with said particular electric vehicle charging station. The method also comprises for at least one charging station out of the set of one or more electric vehicle charging stations, allocating less charging resources to it than its desired amount. This method further comprises allocating to the particular electric vehicle charging station at least the minimum amount of to be allocated charging resources associated with the particular electric vehicle charging station. This method may further comprise any of the method steps and/or features as described herein. In this aspect, the order of priority may be determined in any manner, for example in accordance with the methods described herein.

One aspect of this disclosure relates to a data processing system comprising a computer readable storage medium having computer readable program code embodied therewith, and a processor, preferably a microprocessor, coupled to the computer readable storage medium, wherein responsive to executing the computer readable program code, the processor is configured to perform one or more of the method steps described herein.

One aspect of this disclosure relates to a computer program or suite of computer programs comprising at least one software code portion or a computer program product storing at least one software code portion, the software code portion, when run on a computer system, being configured for executing one or more of the method steps described herein.

One aspect of this disclosure relates to a non-transitory computer-readable storage medium storing at least one software code portion, the software code portion, when executed or processed by a computer, is configured to perform one or more of the method steps described herein.

One aspect of this disclosure relates to a system for allocating charging resources, e.g. amperes, to a plurality of electric vehicle charging stations, the system comprising a data processing system configured to execute one or more of the method steps described herein.

As will be appreciated by one skilled in the art, aspects of the present invention may be embodied as a system, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

In one aspect, embodiments of the present invention may relate to a computer-implemented method for allocating charging resources and/or for causing charging resources to be allocated in accordance with the allocated charging resources.

Moreover, a computer program for carrying out the methods described herein, as well as a non-transitory computer readable storage-medium storing the computer program are provided. A computer program may, for example, be downloaded (updated) to the existing systems for allocating charging resources (e.g. to the existing servers) or be stored upon manufacturing of these systems.

Elements and aspects discussed for or in relation with a particular embodiment may be suitably combined with elements and aspects of other embodiments, unless explicitly stated otherwise. Embodiments of the present invention will be further illustrated with reference to the attached drawings, which schematically will show embodiments according to the invention. It will be understood that the present invention is not in any way restricted to these specific embodiments.

### BRIEF DESCRIPTION OF THE DRAWINGS

Aspects of the invention will be explained in greater detail by reference to exemplary embodiments shown in the drawings, in which:
FIG. 1 illustrates a system for providing charging resources according to an embodiment; and
FIG. 2 is a flow chart illustrating communication according to embodiments between elements of the system for providing charging resources; and
FIG. 3A shows a flow chart illustrating a method for allocating charging resources according to an embodiment;
FIG. 3B shows a flow chart illustrating a method for determining priority sublevels according to an embodiment;
FIG. 4 schematically shows a data processing system according to an embodiment.

### DETAILED DESCRIPTION OF THE DRAWINGS

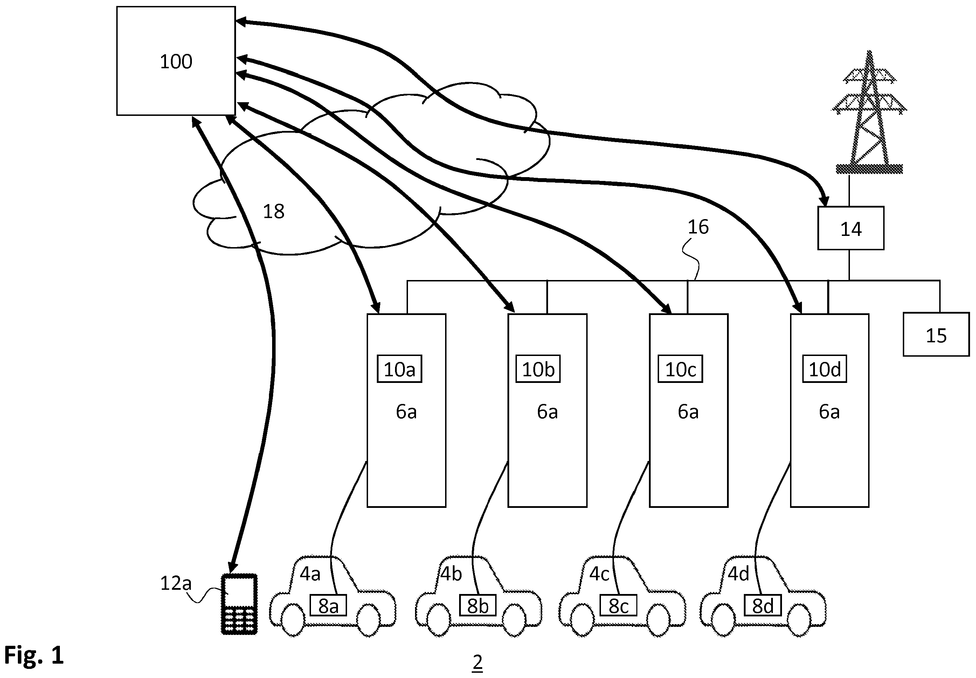

Figure 1 schematically shows a system 2 for providing charging resources to a plurality of electric vehicle charging stations 6. Charging resources may be understood to refer to an amount of amperes. Additionally or alternatively, charging resources may refer to an amount of energy, such as electrical energy, and/or to an amount of power (energy per time duration). The depicted system 2 is an example system in which the present invention may be implemented.

System 2 comprises, amongst others, a data processing system 100 that is configured to execute one or more of the method steps described herein for allocating charging resources to the plurality of electric vehicle charging stations 6.

The data processing system 100 may be connected, for example via a packet switched network 18 such as the internet, to the electric vehicle charging stations 6 so that the data processing system 100 and electric vehicle charging stations 6 can exchange information. Such information for example comprises an indication of the amount of charging resources that the data processing system 100 has allocated to the individual charging stations and/or an indication of the current that the charging station has drawn and/or is drawing and/or an indication of the voltage over a battery that is charged by the charging station.

The charging stations 6 may be connected to a power grid 16. The power grid 16 can deliver the charging resources to the charging stations 6, which in turn provides them to the individual electric vehicles 4 that are connected to the charging stations 6.

As used herein, electric vehicle may be understood to relate to any vehicle comprising an electric propulsion motor. Non-limiting examples of electric vehicles are electric cars, electric motorcycles, electric bicycles, electric airplanes and electric ships. An electric propulsion motor converts electrical energy into mechanical energy and therefore an electric vehicle comprises one or more batteries 8 for storing electrical energy. The electric vehicles 4 and charging stations 6 are configured to electrically connect to each other in order to charge the one or more batteries 8 of the electric vehicles.

In an embodiment, the method comprises causing charging resources to be provided to the plurality of electric vehicle charging stations 6 in accordance with the allocated charging resources, for example by controlling the charging stations such that they do not consume more than the allocated amount. Such controlling may comprise transmitting a message to the charging stations informing them how much charging resources they are maximally allowed to consume. Each charging station 6 may comprise a control module that is configured to maximize the current that its charging station 6 draws from the power grid 8. Upon reception of a message from the data processing system 100 informing the charging station 6 which amount of charging resources has been allocated, the control module may maximize the current such that the allocated amount will not be exceeded, at least for some time period. A charging station or a control module inside a charging station may limit the maximum current the electric vehicle is allowed to draw, via communication through the charge cable. Examples of standards that describe such communication are the IEC61851:2011, IEC61851:2017, its US equivalent J1772, the ISO15118, ChaDeMo, CCS or any yet to be developed future standard. Such time period may be a default time period, or may last until another message is received comprising a new indication of an allocated amount.

In figure 1, the data processing system 100 is depicted as a central server. However, the data processing system 100 may also be a distributed system, for example in the sense that its components are distributed among the different electric vehicle charging stations and/or electric vehicles. In an example, respective data processing systems of the charging stations 6 and/or electric vehicles 4 form a computer network, wherein the data processing systems interact with each other in order to execute the methods as described herein for allocating charging resources to the charging stations 6. In one example, one data processing system of one particular charging station or electric vehicle functions as a central server in the sense that it receives information from the other data processing system in the computer network and performs the method as described herein.

The data processing system 100 may also be configured to communicate with user equipment 12a. Such user equipment 12a may be associated with vehicle 4a and is for example a mobile phone of the vehicle's owner of user. The user equipment 12a is for example configured to transmit user requests for high priority levels to data processing system 100. This may allow an owner of an electric vehicle to control the priority level of the charging station to which his or her car is connected thus allows the owner to control how fast his or her vehicle is charged. In an example, a user can use his mobile phone to communicate his departure time and energy need to the data processing system 100. This information could also be input for determining the priority of the charging station to which the electric vehicle is or will be connected.

Figure 1 also shows that the power distribution network 16 delivers electrical power to other load 15. The other load 15 is for example a building or may even be an entire neighbourhood. Load 15 may in fact be the sum of many loads. It may be that the higher the load 15 is, the lower the amount of charging resources is, that can be allocated to electric vehicle charging stations 6.

The system in this example also comprises a load measuring device 14 that is configured to perform measurements on the power distribution network. Load measurement device may be configured to measure how much power is distributed to the individual components, for example to load 15. Also load measuring device 14 may be connected to data processing system 100.

In one embodiment, the system comprises a first load measuring device and a second load measuring device. In such embodiment, the first load measuring device may be configured to measure the total power that is delivered by the power grid to the entire system of charging stations 6 and other load 15. In such embodiment, the second load measuring device may be configured to measure the power consumption of the charging stations 6. Based on these measurements, the power consumption of the other load 15 can be determined.

The system may even comprise a third load measuring device that is configured to measure the power production of local renewable energy sources, such as PV cells on a one or more buildings.

The below tables illustrate embodiments of the methods described herein. The tables depict respective charging resource distributions for several charging stations A-G. The charging resource allocation may change with every update of priority levels and/or priority sublevels for the charging stations. In the examples below, the charging resource allocation depicted in table II follows the charging resource allocation in table I, the charging resource allocation depicted in table III follows the charging resource allocation in table II, the charging resource allocation depicted in table IV follows the charging resource allocation in table III, et cetera. Given that the methods for charge allocation as described herein comprise a step of updating priority sublevels, each of the tables II - VIII may be understood to illustrate such updating step. Hence, each of the tables II-VIII may be understood to illustrate a separate embodiment of the method described herein. Of course, the tables II-VIII may be also be understood to together illustrate one embodiment that comprises, again and again, updating priority sublevels and subsequently allocating charging resources in accordance with the applicable priority levels and priority sublevels.

**Table I**

| Allocatable amount = 69 A | | | | |
|---|---|---|---|---|
| Priority level | Priority sublevel | Charging station | Desired amount (A) | Allocated amount (A) |
| H | 1 | A | 15 | 15 |
| | 2 | C | 30 | 30 |
| M | 1 | B | 20 | 20 |
| | 2 | D | 20 | - |
| | 3 | E | 35 | - |

The methods described herein comprise determining a priority level for each electric vehicle charging station out of a plurality of charging stations. Table I shows that at some point in time for charging stations A and C a priority level "H" has been determined and for charging stations B, D, E a priority level "M". "H" may stand for "High priority" and "M" for Medium priority". In any case, "H" is a higher priority level than "M". The charging stations A and C form the first group of electric vehicle charging stations as described herein and charging stations B, D, E form the second group of electric vehicle charging stations as described herein.

The methods described herein further comprise determining a priority sublevel for each of the one or more electric vehicle charging stations. Table I shows that at some point in time for each of the electric vehicle charging stations in the second group, namely B, D, E a respective priority sublevel has been determined, namely "1", "2" and "3" respectively, wherein "1" is the highest priority sublevel and "3" the lowest. Thus, an order of priority for the electric vehicle charging stations in the second group has been determined. In this example, a priority sublevel has been determined for each of the charging stations in the first group, namely for A and C, however, the methods for allocating charging resources can be advantageously performed without determining priority sublevels for the charging stations in the first group.

The methods described herein further comprise allocating charging resources to the plurality of electric vehicle charging stations in accordance with applicable priority levels and priority sublevels. Table I shows that charging resources, in this example amperes (A), have been allocated in accordance with the applicable priority levels and priority sublevels. The allocated amount of charging resources is indicated in column "Allocated amount (A)". The allocated amount may be understood to define a maximum amount of charging resources that will be provided to a charging station. The charging resource allocation may be understood to be in accordance with the applicable priority levels and sublevels in that charging stations having a higher priority level are treated with higher priority, e.g. in that they have a higher probability of getting allocated charging resources, than charging stations having a lower priority level, and that, within a group of charging stations having the same priority level, charging stations having a higher priority sublevel are treated with higher priority, e.g. have a higher probability of getting allocated charging resources, than charging stations having a lower priority sublevel. In this particular example, charging resources are allocated to charging stations A, C and B and limited charging resources, in this example no charging resources, are allocated to charging stations D and E. D and E have sublevels of respectively "2" and "3", which are both lower than "1". In this example, priority sublevel "1" is the threshold priority sublevel because it is the lowest priority sublevel that was allocated charging resources without substantial limitations. Charging stations D and E are the disadvantaged electric vehicle charging stations in that they have been allocated limited charging resources, which means that they have a priority sublevel lower than the threshold priority sublevel.

**Table II**

| Allocatable amount = 69 A | | | | |
|---|---|---|---|---|
| Priority level | Priority sublevel | Charging station | Desired amount (A) | Allocated amount (A) |
| H | 1 | C | 32 | 32 |
| | 2 | A | 13 | 13 |
| M | 1 | D | 25 | 24 |
| | 2 | E | 22 | - |
| | 3 | B | 20 | - |

The methods described herein further comprise updating priority sublevels for the electric vehicle charging stations. Table II shows the result of such an updating step. The priority sublevels for charging stations D, E and B, which form the second group of charging stations, have been updated as follows. The priority sublevel for charging station B has changed from "1" to "3", the priority sublevel for charging station D has changed from "2" to "1", the priority sublevel for charging station E has changed from "3" to "2". In this example, each priority sublevel changes, however an update of a priority sublevel may also result in the same priority sublevel. It is to be noted that for charging stations D and E, the previously disadvantaged charging stations, higher priority sublevels have been determined than for charging station B that, before this update, had a priority sublevel of "1", which was equal to the threshold priority sublevel.

Further, it can be noted that in this embodiment, charging station D previously (see table I) belonged to the group of disadvantaged charging stations and had a priority sublevel, viz. "2", higher than charging station E, which also belonged to the group of disadvantaged charging stations and had a priority sublevel "3". Likewise, after updating the priority sublevels (the result of which is shown in table II) electric vehicle charging station D has a higher priority sublevel, viz. "1" than electric vehicle charging station E which has priority sublevel "2".

Further, the methods described herein comprise again allocating charging resources to the plurality of electric vehicle charging stations in accordance with the applicable priority levels and priority sublevels. In this example, the allocatable amount is 68 amperes. The table further shows the desired amount for each charging station in column "Desired amount (A)". In this example, the charging resources are allocated to the plurality of electric vehicle charging stations in accordance with the applicable priority levels and priority sublevels in the sense that the charging resources are allocated, in order of priority, the desired amount of charging resources until substantially the allocatable amount has been allocated. Therefore, charging stations C and A receive their desired amount of charging resources, viz. 32 and 12 A, and the remaining 24 A of the allocatable amount is allocated to charging station D. In this example, the criterium for determining whether a charging station is disadvantaged or fortunate is whether the charging station receives less or respectively more than 80% of its desired amount. Therefore, in this example, D is a fortunate charging station.

In an embodiment, the step of updating priority sublevels is performed for at least the second group of charging stations, but preferably also for the charging stations in the first group and/or any further group of charging stations having the same priority level, most preferably for all electric vehicle charging station irrespective of their priority level. After each priority sublevel update, charging resources may be allocated in accordance with the applicable priority levels and priority sublevels.

**Table III**

| Allocatable amount = 80 A | | | | |
|---|---|---|---|---|
| Priority level | Priority sublevel | Charging station | Desired amount (A) | Allocated amount (A) |
| H | 1 | C | 20 | 20 |
| M | 1 | E | 20 | 20 |
| | 2 | B | 25 | 25 |
| | 3 | D | 30 | 15 |
| L | 1 | A | 10 | - |

Table III illustrates an embodiment, in which the priority levels are updated, which means that the first and second group are also updated. Charging station C still has priority level "H" after the update. However, charging station A's priority level has changed, namely from priority level "H" (see Table II) to priority level "L", which may be understood to stand for "Low". In any case, priority level "L" is lower than "M" and lower than "H".

Changing a priority level for an electric vehicle charging station during an update of priority may be performed based on an indication that the one or more batteries that are charged by the electric vehicle charging station have reached a threshold state of charge. In an example, the electric vehicle charging station measures a current that is drawn by the one or more batters as well as a voltage over the one or more batteries. These current and voltage measurements together may be understood to constitute an indication of the state of charge of the batteries.

As exemplified above, in an embodiment of the method for allocating charging resources, in the step of determining a priority level for each electric vehicle charging station, three groups of one or more electric vehicle charging stations may be formed, wherein each group is associated with a different priority level. Of course, any number of such priority groups may be formed, such as three, four, five, six, seven, eight, nine, ten or even more.

**Table IV**

| Allocatable amount = 75 A | | | | |
|---|---|---|---|---|
| Priority level | Priority sublevel | Charging station | Desired amount (A) | Allocated amount (A) |
| H | 1 | B | 20 | 20 |
| | 2 | C | 25 | 25 |
| M | 1 | D | 30 | 30 |
| | 2 | E | 20 | - |

Table IV illustrates an embodiment wherein an electric vehicle charging station is promoted to the first group. Electric vehicle charging station B which previously had a priority level M (see table III) has now been assigned priority level H. Such embodiment may comprise receiving a user request comprising an indication of a particular electric vehicle charging station, in this case an indication of electric vehicle charging station B. Then, based on the user request, the first priority level may be determined for the particular electric vehicle charging station thus assigning the particular electric vehicle charging station to the first group of one or more electric vehicle charging stations.

It should be appreciated that the user request may be formed by an indication of a desired departure time optionally in combination with a desired distance that the user wishes to travel.

**Table V**

| Allocatable amount = 20 A | | | | |
|---|---|---|---|---|
| Priority level | Priority sublevel | Charging station | Desired amount (A) | Allocated amount (A) |
| H | 1 | B | 20 | 20 |
| | 2 | C | 25 | - |
| M | 1 | F | 20 | - |
| | 2 | E | 20 | - |
| | 3 | D | 30 | - |

Table V illustrates that a new charging station F has become involved. This may also be referred to as that charging station F has become "online". A charging station preferably becomes online automatically when an electric vehicle connects to the charging station. For charging station F, a priority level of "M" is determined. In an embodiment, newly added charging stations will receive the highest priority sublevel within a priority group. This is illustrated in table V, which shows that charging station F has priority sublevel "1".

**Table VI**

| Allocatable amount = 75 A | | | | |
|---|---|---|---|---|
| Priority level | Priority sublevel | Charging station | Desired amount (A) | Allocated amount (A) |
| H | 1 | C | 25 | 25 |
| | 2 | B | 20 | 20 |
| M | 1 | F | 20 | 20 |
| | 2 | E | 30 | - |
| | 3 | D | 25 | - |

Table VI illustrates an embodiment, wherein a minimum amount of to be allocated charging resources of 13 A is defined for the charging stations. After charging resources have been assigned to charging stations C, B and F, 65 A has been allocated and still 10 A remains from the allocatable amount, which was 75 A. However, because this is not sufficient for allocating at least 13 A to charging station E, no charging resources are assigned to charging station E. If for example charging station D would be associated with a minimum amount of to be allocated charging resources of 10 A, then the remaining 10 A can be allocated to charging station D.

**Table VII**

| Allocatable amount = 95 A | | | | |
|---|---|---|---|---|
| Priority level | Priority sublevel | Charging station | Desired amount (A) | Allocated amount (A) |
| H | 1 | B | 25 | 25 |
| | 2 | C | 25 | 25 |
| M | 1 | G | 25 | 25 |
| | 2 | E | 20 | 20 |
| | 3 | D | 20 | - |
| | 4 | F | 20 | - |

Table VII illustrates an embodiment, wherein charging stations G and E have been assigned respective priority sublevels of "1" and "2" and have been subsequently allocated charging resources. Thus, in this example, the threshold priority sublevel is "2". In this embodiment, in the next update of priority sublevels, electric vehicle charging station G will again receive a higher priority sublevel than electric vehicle charging station E as is shown in table VIII.

**Table VIII**

| Allocatable amount = 81 A | | | | |
|---|---|---|---|---|
| Priority level | Priority sublevel | Charging station | Desired amount (A) | Allocated amount (A) |
| H | 1 | C | 25 | 24 |
| | 2 | B | 25 | 24 |
| M | 1 | D | 20 | 20 |
| | 2 | F | 20 | 13 |
| | 3 | G | 25 | - |
| | 4 | E | 20 | - |

Table VIII illustrates an embodiment, wherein a minimum amount of charging resources of 13 A should be allocated to each electric vehicle charging station. In this example, the allocatable amount is 81 A. In this embodiment, charging station F is preceded - in the order of priority as defined by the priority levels and priority sublevels - by charging stations C, B and D. The sum of the respective desired amounts for C, B and D is 70 A (25 + 25 + 20), which is lower than the 81 A that can be allocated. However, the difference between 70 A and 81 A is 11 A, which is less than the minimum of 13 A that should at least be allocated to charging station F. In such case, in one embodiment, less charging resources than desired are allocated to at least one of the charging stations that precede charging station F in the order of priority. In this particular example, charging stations C and B, which both are associated with a desired amount of charging resources of 25 A, are both allocated 24 A. This allows to allocate 13 A to charging station F. Such embodiment enables to fully allocate the allocatable amount.

**Table IX**

| Allocatable amount = 74 A | | | | |
|---|---|---|---|---|
| Priority level | Priority sublevel | Charging station | Desired amount (A) | Allocated amount (A) |
| H | 1 | C | 25 | 25 |
| | 2 | B | 25 | 23 |
| M | 1 | D | 20 | 13 |
| | 2 | F | 20 | 13 |
| | 3 | G | 25 | - |
| | 4 | E | 20 | - |

Table IX shows another embodiment of how charging resources may be allocated given a certain order of priority and given a certain allocatable amount of 74A and a generic minimum amount (for all charging stations) of 13A. In this embodiment, charging station C which is the first in order of priority receives its desired amount, whereas charging station D (and B) receive less than their desired amount in order to be able to allocate the minimum of 13A to F.

In this example, the difference between the sum of the desired amounts of C, B, D (70A) and the allocatable amount (74A) is 4A, which is less than the minimum amount (13A) to be allocated to F. Thus, in order to be able to fully allocate the allocatable resources, an additional 9A should be allocated to F. Each charging station out of the set of one or more charging stations (C, B, D in this example) may be understood to be associated with a surplus amount of charging resources. A surplus amount of charging resources for a charging station is defined as the difference between the desired amount of charging resources for the charging station and the minimum of to be allocated amount of charging resources for the charging station. Allocating the charging resources may then involve allocating, from the charging stations out of the set of one or more charging stations, in decreasing order of priority, the surplus amounts or parts thereof to the particular electric vehicle charging station (station F in this example) until the minimum amount of allocatable charging resources has been allocated to the particular charging station (station F in this example).

This allocation of surplus amounts may comprise allocating entire surplus amounts of charging stations out of the set of one or more charging stations to the particular charging station (as for example shown above where station D has a surplus amount of 7A (20A desired - 13A minimum) and wherein this entire surplus ends up at station F.

In yet another example, only parts of the surplus amounts may be allocated to the particular charging station, for example a fixed amount, such as 3A, (to the extent available) from each charging station, in decreasing order of priority, out of the set of one or more charging stations.

In the above embodiments, the allocatable amount changes. In an embodiment, the method comprises determining the allocatable amount. This is for example performed on the basis of a current time. Additionally or alternatively, the allocatable amount is determined on the basis of measurement of a current load on the energy distribution network to which the electric vehicle charging stations are connected.

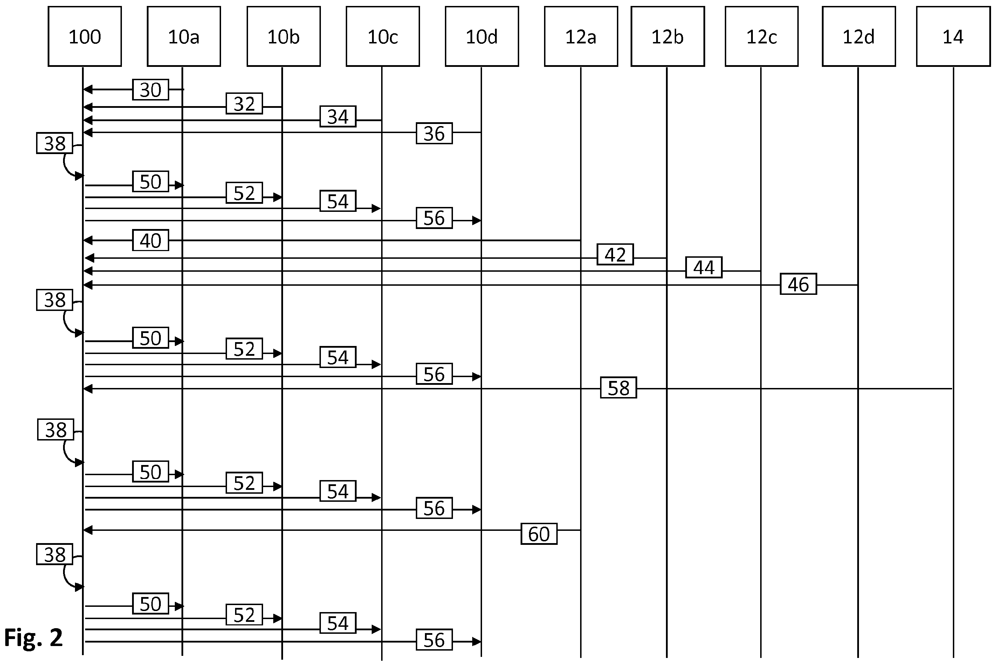

Figure 2 is a flow diagram illustrating how the electric vehicle charging stations 6, in particular their communication module 10, communicate with data processing system 100 that is configured to allocate charging resources to the electric vehicle charging stations in accordance with the methods as described herein. In steps 30, 32, 34, 36, the respective communication modules 10a, 10b, 10c, 10d, transmit one or more messages indicative of the state of charge of the batteries connected to the electric vehicle charging station. The electric vehicle charging stations may be configured to repeatedly, e.g. periodically transmit messages indicative of said state of charge to data processing system 100. An example of such message is a message indicating a meter value, such as current drawn, because based on this information, the state of charge can be determined.

Additionally or alternatively, the states of charge are estimated, for example based on statistical analyses and/or by taking into account that a battery that has been charging for some time has a higher state of charge than at the beginning of the charging session. Further, the state of charge may be estimated on a charge rate fluctuation. A declining charge rate is typically indicative of a state of charge of over 80%. In principle any method for estimating a state of charge of a battery may be used so that the data processing system 100 obtains the states of charge of the batteries connected to the charging stations.

In step 38 the data processing performs an update step in which the priority levels and/or priority sublevels associated with the charging stations are updated. This update step may be performed on the received states of charge as indicated in messages 30, 32, 34, 36 and/or as estimated. **In** an example, an electric vehicle charging station that is connected to a battery having a relatively low state of charge receives a relatively high priority level and a charging station that is connected to a battery having a relatively high state of charge receives a relatively low priority level. The data processing system 100 may be configured to perform update step 38 with a predetermined frequency. Additionally or alternatively, the data processing system 100 may be configured to perform update step 38 once it has received a state of charge of each of the electric vehicle charging stations. Step 38 also comprises allocating charging resources to charging stations in accordance with the determined priority levels and priority sublevels in accordance with the method described herein.

In steps 50, 52, 54, 56, the data processing system 100 transmits messages to the respective charging stations 6a, 6b, 6c, 6d indicative of the amount of charging resources that have been respectively allocated to them. Such message may comprise a so-called charging profile as described in the Open Charge Point Protocol version 2.0 or equivalent protocol. Transmitting such charging profiles to charging stations may be understood to be an example of controlling the charging stations. A local protocol that does the same (where system 100 is not a cloud system but a local device) could communicate over EEBUS or any other (proprietary) bus-protocol.

Additionally or alternatively to messages 30, 32, 34, 36, the data processing system 100 receives messages 40, 42, 44, 46 from user equipment 12a, 12b, 12c, 12d respectively associated with electric vehicles 4a, 4b, 4c, 4d. Such user equipment is for example a mobile phone of the owner of the electric vehicle. Messages 40, 42, 44, 46 may be indicate of a desired time of departure and optionally of a distance that the electric vehicle should be able to travel after the charging session and/or of a desired state of charge of the battery at said desired time of departure. In an example, message 40 indicates that electric vehicle 4a having its one or more batteries connected to charging station 6a, had a desired time of departure of 13:00 o'clock, while it is currently 12:00 o'clock. Further, message 40 may indicate that the electric vehicle 4a should be able to travel 80 kilometers. This means that one hour remains to charge the one or more batteries of electric vehicle 4a to achieve a state of charge that is sufficient for travelling 80 kilometers. Continuing this example, message 42 may indicate that electric vehicle 4b should be able to travel 100 kilometers at 10:00 o'clock the next day. Thus, there is still ten hours left achieve the appropriate state of charge for the one or more batteries of electric vehicle 4b. As a consequence, step 38 may comprise determining a higher priority level for electric vehicle charging station 4a than for electric vehicle charging station 4b. Again step 38 comprises allocating charging resources and the charging stations are informed of the amount of charging resources in steps 50, 52, 54, 56.

In an embodiment, the data processing system 100 receives from load measurement device 14 a message 58 indicative of the current load on power distribution network 16. As such, the allocatable amount of charging resources may change. Such message 58 may trigger data processing system 100 to allocate the charging resources again (step 38).

In an embodiment, the allocatable amount of charging resources is determined based on a current time. In such embodiment, the data processing system 100 may have stored and/or may receive a relation between time and allocatable amount. Such relation for example stipulates that the allocatable amount of charging resources is higher at night than during the day.

In an embodiment, the data processing system 100 receives a user request 60, for example from a user equipment. Such user request may comprise a request for a particular priority level. In an example, user request 60 requests that the highest priority level is determined for electric vehicle charging station 6a. As a consequence, in step 38, the data processing system 100 may determine the highest priority level for electric vehicle charging station 6a accordingly.

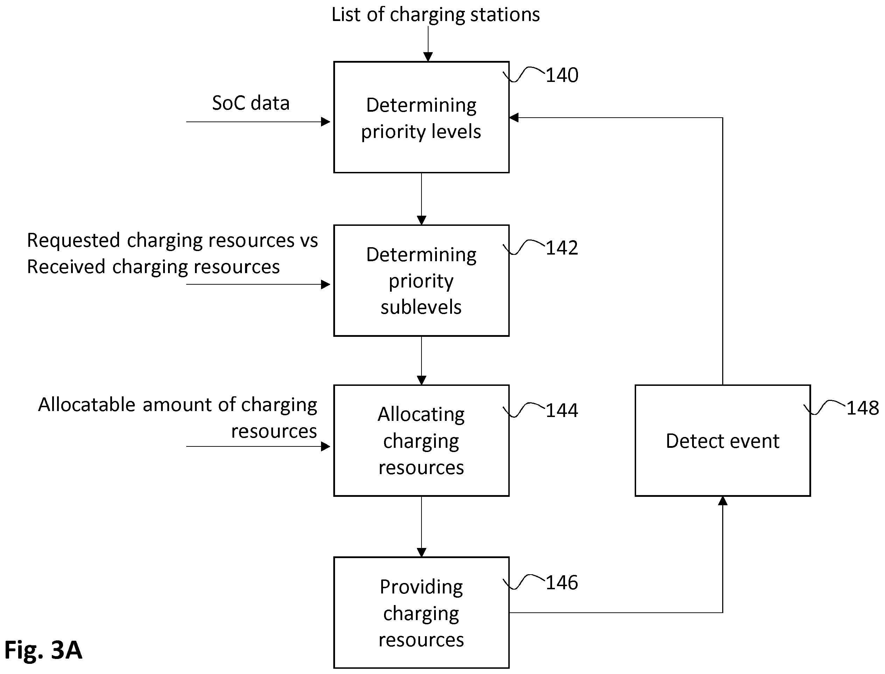

Fig. 3A shows a flow chart illustrating a method for allocating charging resources according to an embodiment. Herein, step 140 depicts a step of determining priority levels for charging stations. Herewith priority groups are determined as described herein. In an example, determining a priority level is performed on the basis of a state of charge of the batteries of the respective electric vehicles connected to the charging stations. In such example, charging stations that are connected to vehicles with batteries having lower state of charge will be assigned to higher level priority groups.

In step 142, priority sublevels may be determined for charging stations in at least one priority group, but preferably a priority sublevel is determined for all charging stations. Determining a priority sublevel for a charging station may be performed on the basis of the extent to which the charging station has received its requested charging resources in the previous round of charging resources provisioning. This information, in one embodiment, is used to determine whether a charging station belongs to a group of disadvantaged charging stations as described herein.

In step 144, the charging resources are allocated to the charging stations in accordance with the determined priority levels and sublevels. Such charging resources allocation may be performed on the basis of an allocatable amount of charging resources. Such allocatable amount of charging resources may be determined as described herein.

Optionally, the method also comprises a step 146 of causing the provisioning of the allocated charging resources to the charging stations, for example by controlling the charging stations appropriately.

The above described steps may be performed repeatedly. In an example the steps are performed upon the detection of an event (step 148). Such event may be a timer that expires. Additionally or alternatively, such event may be an electric vehicle connecting to or disconnecting from one of the charging stations.

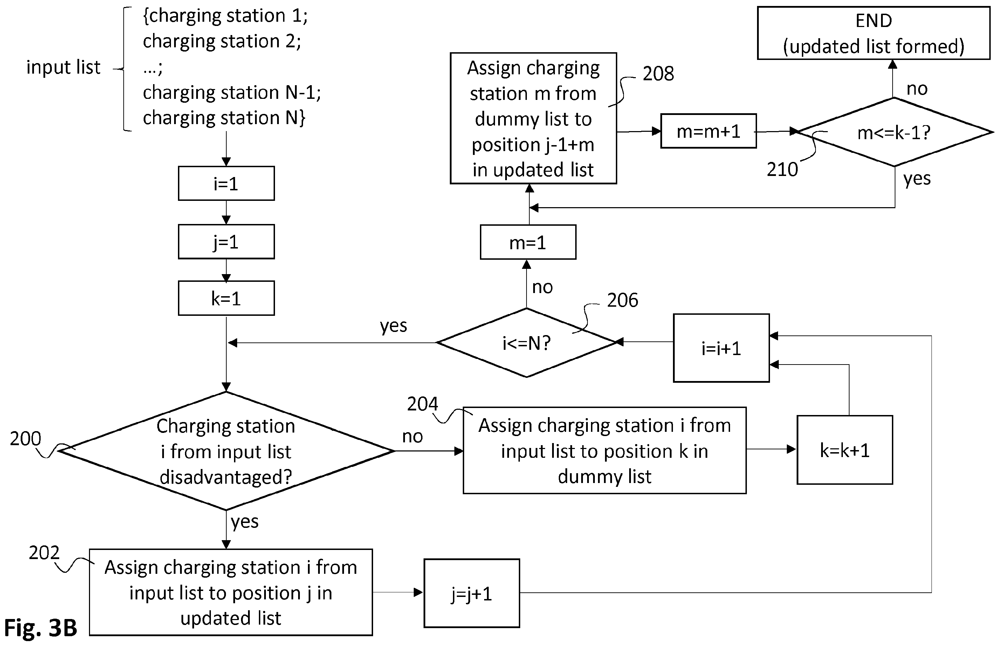

Fig. 3B illustrates how the priority sublevels for a given priority group of charging stations may be updated according to an embodiment. In this example, a priority group of charging stations all having the same priority level consists of N charging stations number 1 to N. These charging stations have an order of priority as defined by their respective priority sublevels. This order of priority is reflected in the order in which the charging stations appear in the input list. Charging station 1 has the highest priority sublevel within the priority level group and charging station N has the lowest priority sublevel within the priority level group.

In this embodiment, the input list is input into a computer implemented method according to an embodiment, that begins with setting three counters i, j, k to 1. Then, in box 200, for charging station i from the input list it is checked whether charging station i belongs to a group of one or more disadvantaged electric vehicle charging stations. This may be the case if charging station i, in the previous allocation of charging resources received only limited charging resources, e.g. less than requested or desired. If so, then in box 202, the charging station i is assigned to position j in a list referred to as "updated list". Subsequently, the counter j is incremented by 1 and counter i is also incremented by 1.

If the charging station i in box 200 is determined as not belonging to a group of disadvantaged charging stations, then in box 204 charging station i from the input list is assigned to position k in a list referred to as "dummy list". Subsequently, counter k is incremented by 1 and counter i is also incremented by 1.

In box 206 it is checked whether there are still charging stations left from the input list that are still to be assigned to either "updated list" or "dummy list". If this is indeed the case, then box 200 is performed again (for the next charging station from the input list since counter i has been incremented by 1).

If all N charging stations from the input list have been assigned to either the updated list or the dummy list, then a counter m is set to 1. Subsequently, in box 208, charging station m from the dummy list is assigned to position j-1+m in the updated list. Box 210 ensures that this is performed for all charging stations in the dummy list. Herewith, effectively, the dummy list is appended to the updated list. As such, an updated list is formed. It should be appreciated that the positions of the charging stations within the updated list reflect the priority sublevels of the charging stations within the priority level group. Then, charging resources may be allocated in accordance with these priority sublevels (not shown in figure 3B).

If the priority sublevels in this priority group are updated again, then the method according to the flow chart may be performed again. In such case, the previously formed updated list may then be fed as input list to the algorithm.

It should be appreciated that such method for updating priority sublevels within a priority group may be performed separately for each priority group.As described herein, charging stations may change priority level and may thus leave or enter priority level groups. In one embodiment, updating priority sublevels comprises determining the highest priority sublevel for a charging station that is new to the priority level group. In such embodiment, p (p being an integer equal to or larger than 1) new charging stations may first be assigned to the first p positions of the updated list before initiating the method depicted in figure 3B. In such case counter j should be initialized as j=p+1 instead of j=1, because the first j positions of the updated list have already been taken by the new charging stations in the group.

If charging stations leave the priority level group, then they will typically not be part of the input list anymore that is input to the algorithm.

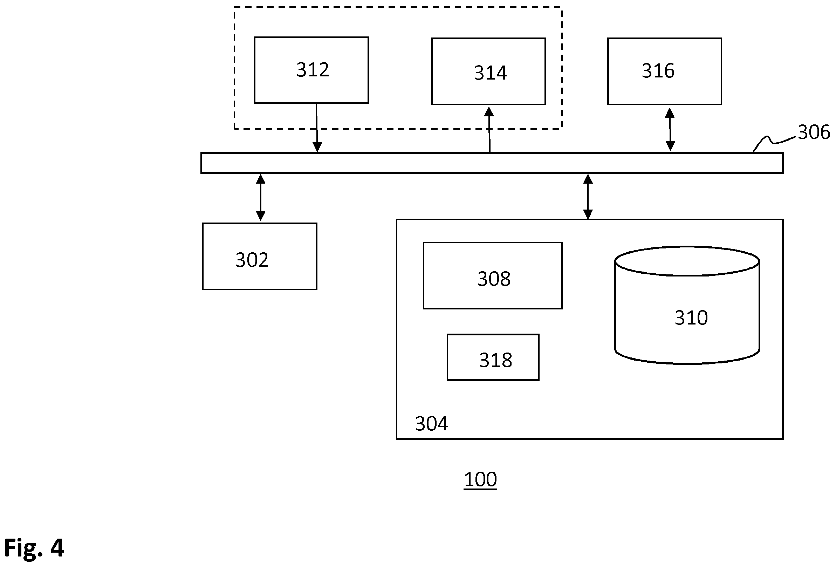

Fig. 4 depicts a block diagram illustrating an exemplary data processing system according to an embodiment.

As shown in Fig. 4, the data processing system 100 may include at least one processor 302 coupled to memory elements 304 through a system bus 306. As such, the data processing system may store program code within memory elements 304. Further, the processor 302 may execute the program code accessed from the memory elements 304 via a system bus 306. In one aspect, the data processing system may be implemented as a computer that is suitable for storing and/or executing program code. It should be appreciated, however, that the data processing system 100 may be implemented in the form of any system including a processor and a memory that is capable of performing the functions described within this specification.

The memory elements 304 may include one or more physical memory devices such as, for example, local memory 308 and one or more bulk storage devices 310. The local memory may refer to random access memory or other non-persistent memory device(s) generally used during actual execution of the program code. A bulk storage device may be implemented as a hard drive or other persistent data storage device. The processing system 100 may also include one or more cache memories (not shown) that provide temporary storage of at least some program code in order to reduce the number of times program code must be retrieved from the bulk storage device 310 during execution.

Input/output (I/O) devices depicted as an input device 312 and an output device 314 optionally can be coupled to the data processing system. Examples of input devices may include, but are not limited to, a keyboard, a pointing device such as a mouse, or the like. Examples of output devices may include, but are not limited to, a monitor or a display, speakers, or the like. Input and/or output devices may be coupled to the data processing system either directly or through intervening I/O controllers.

**In** an embodiment, the input and the output devices may be implemented as a combined input/output device (illustrated in Fig. 4 with a dashed line surrounding the input device 312 and the output device 314). An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter 316 may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system 100, and a data transmitter for transmitting data from the data processing system 100 to said systems, devices and/or networks. Modems, cable modems, and Ethernet cards are examples of different types of network adapter that may be used with the data processing system 100.

As pictured in Fig. 4, the memory elements 304 may store an application 318. In various embodiments, the application 318 may be stored in the local memory 308, the one or more bulk storage devices 310, or apart from the local memory and the bulk storage devices. It should be appreciated that the data processing system 100 may further execute an operating system (not shown in Fig. 4) that can facilitate execution of the application 318. The application 318, being implemented in the form of executable program code, can be executed by the data processing system 100, e.g., by the processor 302. Responsive to executing the application, the data processing system 100 may be configured to perform one or more operations or method steps described herein.

In another aspect, the data processing system 100 may represent a client data processing system. In that case, the application 318 may represent a client application that, when executed, configures the data processing system 100 to perform the various functions described herein with reference to a "client". Examples of a client can include, but are not limited to, a personal computer, a portable computer, a mobile phone, or the like.

In yet another aspect, the data processing system 100 may represent a server. For example, the data processing system may represent an (HTTP) server, in which case the application 318, when executed, may configure the data processing system to perform (HTTP) server operations.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. **In** another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 302 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration, but is not intended to be exhaustive or limited to the implementations in the form disclosed. Many modifications and variations will be apparent to those of ordinary skill in the art without departing from the scope and spirit of the present invention. The embodiments were chosen and described in order to best explain the principles and some practical applications of the present invention, and to enable others of ordinary skill in the art to understand the present invention for various embodiments with various modifications as are suited to the particular use contemplated.

## Claims

1. A method for allocating charging power and/or charging current to a plurality of electric vehicle charging stations, the method comprising
a step (i) of determining a priority level for each electric vehicle charging station of the plurality of electric vehicle charging stations thus determining a first group of one or more electric vehicle charging stations associated with a first priority level and a second group of one or more electric vehicle charging stations associated with a second priority level, the first priority level being higher than the second priority level, and is **characterized by**
a step (ii) of determining a priority sublevel for each of the one or more electric vehicle charging stations in the second group thus determining an order of priority for the one or more electric vehicle charging stations in the second group, and
a step (iii) of allocating charging power and/or charging current to the plurality of electric vehicle charging stations in accordance with the applicable priority levels and priority sublevels, wherein one or more disadvantaged electric vehicle charging stations in the second group for which charging stations a priority sublevel lower than a threshold priority sublevel has been determined, are allocated limited charging power and/or charging current, and
a step (iv) of updating priority sublevels for the electric vehicle charging stations in the second group thus determining an updated order of priority for the one or more electric vehicle charging stations in the second group, this step comprising determining higher priority sublevels for the disadvantaged electric vehicle charging stations in the second group than for electric vehicles in the second group that had a priority sublevel equal to or higher than said threshold priority sublevel before this updating step,
a step (v) of allocating charging power and/or charging current to the plurality of electric vehicle charging stations in accordance with the applicable priority levels and priority sublevels.

2. The method according to the preceding claims, wherein allocating the charging power and/or charging current to the plurality of charging stations comprises determining for each charging station a maximum amount of charging power and/or charging current that will be provided to the charging station.

3. The method according to claim 1 or 2, wherein allocating charging power and/or charging current to the plurality of charging stations in accordance with the determined priority levels comprises treating each electric vehicle charging station in the first group with higher priority than any electric vehicle in the second group and treating the electric vehicles in the second group with a priority in accordance with their respective determined priority sublevels.

4. The method according to claim 1, 2 or 3, comprising at least one of
after step (iii), updating priority levels for electric vehicle charging stations out of the plurality of electric vehicle charging stations thus updating the first and second group of electric vehicle charging stations; and.
determining a priority sublevel for each of the one or more electric vehicle charging stations in the first group thus determining an order of priority for the one or more electric vehicle charging stations in the first group; and
repeating step (iv) and repeating step (v).

5. The method according to one or more of the preceding claims, comprising causing charging power and/or charging current to be provided to the plurality of electric vehicle charging stations in accordance with the allocated charging power and/or charging current.

6. The method according to one or more of the preceding claims, wherein
step (ii) comprises determining a first particular priority sublevel for a first particular electric vehicle charging station in the second group and determining a second particular priority sublevel for a second particular electric vehicle charging station in the second group, the first particular priority sublevel being higher than the second particular sublevel, both the first particular priority sublevel and second particular priority sublevel being lower than said threshold priority sublevel, and wherein
step (iv) comprises determining a higher priority sublevel for the first particular electric vehicle charging station than for the second particular electric vehicle.

7. The method according to one or more of the preceding claims, wherein
step (ii) comprises determining a third particular priority sublevel for a third particular electric vehicle charging station in the second group and determining a fourth particular priority sublevel for a fourth particular electric vehicle charging station in the second group, the third particular priority sublevel being equal to or higher than the fourth particular sublevel, both the third particular priority sublevel and fourth particular priority sublevel being higher than or equal to said threshold priority sublevel, and wherein
step (iv) comprises determining a higher priority sublevel for the third particular electric vehicle charging station than for the fourth particular electric vehicle.

8. The method according to one or more of the preceding claims, comprising
receiving a user request comprising an indication of a particular electric vehicle charging station, and
based on the user request, determining the first priority level for the particular electric vehicle charging station thus assigning the particular electric vehicle charging station to the first group of one or more electric vehicle charging stations.

9. The method according to one or more of the preceding claims, comprising
obtaining an allocatable amount of charging power and/or charging current for the plurality of electric vehicle charging stations, and
obtaining for each electric vehicle charging station out of the plurality of electric vehicle charging stations, a desired amount of charging power and/or charging current, wherein
the applicable priority levels and priority sublevels define an order of priority for the plurality of electric vehicle charging stations, and wherein
allocating charging power and/or charging current to the plurality of electric vehicle charging stations in accordance with the applicable priority levels and priority sublevels comprises allocating, in order of priority, the desired amount of charging power and/or charging current to each electric vehicle charging station until substantially the allocatable amount has been allocated.

10. The method according to the preceding claim, wherein obtaining the allocatable amount of charging power and/or charging current comprises determining the allocatable amount based on a current time.

11. The method according to one or more of the preceding claims, wherein
each of the electric vehicle charging stations is associated with a minimum amount of to be allocated charging power and/or charging current and wherein the method comprises
allocating to each electric vehicle charging station either substantially zero, e.g. no, charging power and/or charging current or an amount of charging power and/or charging current that is equal to or higher than its associated minimum amount of to be allocated charging power and/or charging current.

12. The method according to the preceding claim, further comprising
obtaining an allocatable amount of charging power and/or charging current for the plurality of electric vehicle charging stations, and
obtaining for each electric vehicle charging station out of the plurality of electric vehicle charging stations, a desired amount of charging power and/or charging current, wherein
the applicable priority levels and priority sublevels define an order of priority for the plurality of electric vehicle charging stations, wherein in the order of priority a particular electric vehicle charging station is preceded by a set of one or more electric vehicle charging stations, wherein
a sum of the respective desired amounts of charging power and/or charging current for the set of one or more electric vehicle charging stations is lower than the allocatable amount and wherein a difference between the allocatable amount and said sum is less than the minimum amount of to be allocated charging power and/or charging current associated with said particular electric vehicle charging station, the method comprising
for at least one charging station out of the set of one or more electric vehicle charging stations, allocating less charging power and/or charging current to it than its desired amount, and the method further comprising
allocating to the particular electric vehicle charging station at least the minimum amount of to be allocated charging power and/or charging current associated with the particular electric vehicle charging station.

13. A data processing system comprising
a computer readable storage medium having computer readable program code embodied therewith, and
a processor, preferably a microprocessor, coupled to the computer readable storage medium, wherein responsive to executing the computer readable program code, the processor is configured to perform the method according to one or more of the preceding claims 1-12.

14. A computer program or suite of computer programs comprising at least one software code portion or a computer program product storing at least one software code portion, the software code portion, when run on a computer system, being configured for executing the method according to one or more of the claims 1-12.

15. A system for allocating charging power and/or charging current, to a plurality of electric vehicle charging stations, the system comprising a data processing system configured to execute the method according to one or more of the preceding claims 1-12.

## Patentansprüche

1. Verfahren zum Zuweisen von Ladeleistung und/oder Ladestrom an eine Mehrzahl von Elektrofahrzeug-Ladestationen, wobei das Verfahren aufweist:
einen Schritt (i) zum Bestimmen einer Prioritätsstufe für jede Elektrofahrzeug-Ladestation der Mehrzahl von Elektrofahrzeug-Ladestationen, somit Bestimmen einer ersten Gruppe von einer oder mehrerer Elektrofahrzeug-Ladestationen, die mit einer ersten Prioritätsstufe verknüpft sind, und einer zweiten Gruppe von einer oder mehreren Elektrofahrzeug-Ladestationen, die mit einer zweiten Prioritätsstufe verknüpft sind, wobei die erste Prioritätsstufe höher ist als die zweite Prioritätsstufe,
und **gekennzeichnet ist durch**
einen Schritt (ii) eines Bestimmens einer Prioritätsunterstufe für jede von der einen oder den mehreren Elektrofahrzeug-Ladestationen in der zweiten Gruppe, somit Bestimmen einer Prioritätsreihenfolge für die eine oder mehreren Elektrofahrzeug-Ladestationen in der zweiten Gruppe, und
einen Schritt (iii) eines Zuweisens von Ladeleistung und/oder Ladestrom an die Mehrzahl an Elektrofahrzeug-Ladestationen in Übereinstimmung mit den geltenden Prioritätsstufen und Prioritätsunterstufen, wobei einer oder mehreren benachteiligten Elektrofahrzeug-Ladestationen in der zweiten Gruppe, für welche Ladestationen eine Prioritätsunterstufe bestimmt worden ist, die geringer ist als eine Schwellwertprioritätsunterstufe, eine begrenzte Ladeleistung und/oder ein begrenzter Ladestrom zugewiesen wird, und
einen Schritt (iv) eines Aktualisierens von Prioritätsunterstufen für die Elektrofahrzeug-Ladestationen in der zweiten Gruppe, somit Bestimmen einer aktualisierten Prioritätsreihenfolge für die eine oder die mehreren Elektrofahrzeug-Ladestationen in der zweiten Gruppe, wobei dieser Schritt ein Bestimmen höherer Prioritätsunterstufen für die benachteiligten Elektrofahrzeug-Ladestationen in der zweiten Gruppe als für Elektrofahrzeug-Ladestationen in der zweiten Gruppe aufweist, die eine Prioritätsunterstufe hatten, die gleich der oder höher als die genannte Schwellwertprioritätsunterstufe vor diesen Aktualisierungsschritt hatten,
einen Schritt (v) eines Zuweisens von Ladeleistung und/oder Ladestrom an die Mehrzahl von Elektrofahrzeug-Ladestationen in Übereinstimmung mit den geltenden Prioritätsstufen und Prioritätsunterstufen.

2. Verfahren nach dem vorhergehenden Anspruch, wobei das Zuweisen von Ladeleistung und/oder Ladestrom an die Mehrzahl von Ladestationen ein Bestimmen, für jede Ladestation, einer maximalen Menge an Ladeleistung und/oder Ladestrom aufweist, der der Ladestation bereitgestellt werden wird.

3. Verfahren nach Anspruch 1 oder 2, wobei das Zuweisen von Ladeleistung und/oder Ladestrom an die Mehrzahl von Ladestationen in Übereinstimmung mit den bestimmten Prioritätsstufen ein Behandeln jeder Elektrofahrzeug-Ladestation in der ersten Gruppe mit einer höheren Priorität als irgendeine Elektrofahrzeug-Ladestation in der zweiten Gruppe und ein Behandeln der Elektrofahrzeug-Ladestationen in der zweiten Gruppe mit einer Priorität in Übereinstimmung mit ihren jeweiligen bestimmten Prioritätsunterstufen aufweist.

4. Verfahren nach Anspruch 1, 2 oder 3, das zumindest eines von Folgendem aufweist:
nach Schritt (iii), Aktualisieren von Prioritätsstufen für Elektrofahrzeug-Ladestationen aus der Mehrzahl von Elektrofahrzeug-Ladestationen, somit Aktualisieren der ersten und zweiten Gruppe von Elektrofahrzeug-Ladestationen; und
Bestimmen einer Prioritätsunterstufe für jede der einen oder der mehreren Elektrofahrzeug-Ladestationen in der ersten Gruppe, somit Bestimmen einer Prioritätsreihenfolge für die eine oder mehreren Elektrofahrzeug-Ladestationen in der ersten Gruppe; und
Wiederholen von Schritt (iv) und Wiederholen von Schritt (v).

5. Verfahren nach einem oder mehreren der vorhergehenden Ansprüche, das ein Veranlassen aufweist, dass Ladeleistung und/oder Ladestrom an die Mehrzahl von Elektrofahrzeug-Ladestationen in Übereinstimmung mit der zugewiesenen Ladeleistung und/oder dem zugewiesenen Ladestrom bereitgestellt wird.

6. Verfahren nach einem oder mehreren der vorhergehenden Ansprüche, wobei
Schritt (ii) ein Bestimmen einer ersten besonderen Prioritätsunterstufe für eine erste besondere Elektrofahrzeug-Ladestation in der zweiten Gruppe und ein Bestimmen einer zweiten besonderen Prioritätsunterstufe für eine zweite besondere Elektrofahrzeug-Ladestation in der zweiten Gruppe aufweist, wobei die erste besondere Prioritätsunterstufe höher ist als die zweite besondere Unterstufe, wobei sowohl die erste besondere Prioritätsunterstufe als auch die zweite besondere Prioritätsunterstufe geringer ist als die genannte Schwellwertprioritätsunterstufe, und wobei
Schritt (iv) ein Bestimmen einer höheren Prioritätsunterstufe für die erste besondere Elektrofahrzeug-Ladestation als für die zweite besondere Elektrofahrzeug-Ladestation aufweist.

7. Verfahren nach einem oder mehreren der vorhergehenden Ansprüche, wobei
Schritt (ii) ein Bestimmen einer dritten besonderen Prioritätsunterstufe für eine dritte besondere Elektrofahrzeug-Ladestation in der zweiten Gruppe und ein Bestimmen einer vierten besonderen Prioritätsunterstufe für eine vierte besondere Elektrofahrzeug-Ladestation in der zweiten Gruppe aufweist, wobei die dritte besondere Prioritätsunterstufe gleich der oder höher als die vierte besondere Unterstufe ist, wobei sowohl die dritte besondere Prioritätsunterstufe und die vierte besondere Prioritätsunterstufe höher als die oder gleich der genannten Schwellwertprioritätsunterstufe sind, und wobei
Schritt (iv) ein Bestimmen einer höheren Prioritätsunterstufe für die dritte besondere Elektrofahrzeug-Ladestation als für die vierte besondere Elektrofahrzeug-Ladestation aufweist.

8. Verfahren nach einem oder mehreren der vorhergehenden Ansprüche, das aufweist:
Empfangen einer Benutzeranfrage, die eine Angabe einer besonderen Elektrofahrzeug-Ladestation aufweist, und
basierend auf der Benutzeranfrage, Bestimmen der ersten Prioritätsstufe für die besondere Elektrofahrzeug-Ladestation, somit Zuordnen der besonderen Elektrofahrzeug-Ladestation zu der ersten Gruppe der einen oder mehreren Elektrofahrzeug-Ladestationen.

9. Verfahren nach einem oder mehreren der vorhergehenden Ansprüche, das aufweist:
Erhalten einer zuweisbaren Menge an Ladeleistung und/oder Ladestrom für die Mehrzahl von Elektrofahrzeug-Ladestationen, und
Erhalten, für jede Elektrofahrzeug-Ladestation aus der Mehrzahl von Elektrofahrzeug-Ladestationen, eine gewünschte Menge an Ladeleistung und/oder Ladestrom, wobei
die geltenden Prioritätsstufen und Prioritätsunterstufen eine Prioritätsreihenfolge für die Mehrzahl an Elektrofahrzeug-Ladestationen definieren, und wobei
das Zuweisen von Ladeleistung und/oder Ladestrom an die Mehrzahl von Elektrofahrzeug-Ladestationen in Übereinstimmung mit den geltenden Prioritätsstufen und Prioritätsunterstufen ein Zuweisen, in der Prioritätsreihenfolge, der gewünschten Menge an Ladeleistung und/oder Ladestrom an jede Elektrofahrzeug-Ladestation aufweist, bis im Wesentlichen die zuweisbare Menge zugewiesen worden ist.

10. Verfahren nach dem vorhergehenden Anspruch, wobei das Erhalten der zuweisbaren Menge an Ladeleistung und/oder Ladestrom ein Bestimmen der zuweisbaren Menge basierend auf einer aktuellen Zeit aufweist.

11. Verfahren nach einem oder mehreren der vorhergehenden Ansprüche, wobei
jede der Elektrofahrzeug-Ladestationen mit einer minimalen Menge von zuzuweisender Ladeleistung und/oder Ladestrom verknüpft ist, und wobei das Verfahren aufweist:
Zuweisen, an jede Elektrofahrzeug-Ladestation, einer Ladeleistung und/oder Ladestrom von entweder im Wesentlichen null, bspw. keine Ladeleistung und/oder keinen Ladestrom, oder einer Menge an Ladeleistung und/oder Ladestrom, die gleich der oder höher ist als die mit ihr verknüpfte minimale Menge an zuzuweisender Ladeleistung und/oder zuzuweisendem Ladestrom.

12. Verfahren nach dem vorhergehenden Anspruch, das weiterhin aufweist:
Erhalten einer zuweisbaren Menge an Ladeleistung und/oder Ladestrom für die Mehrzahl an Elektrofahrzeug-Ladestationen, und
Erhalten, für jede Elektrofahrzeug-Ladestation aus der Mehrzahl von Elektrofahrzeug-Ladestationen, einer gewünschten Menge an Ladeleistung und/oder Ladestrom, wobei
die geltenden Prioritätsstufen und Prioritätsunterstufen eine Prioritätsreihenfolge für die Mehrzahl von Elektrofahrzeug-Ladestationen definieren, wobei in der Prioritätsreihenfolge einer besonderen Elektrofahrzeug-Ladestation ein Satz von einer oder mehreren Elektrofahrzeug-Ladestationen vorangeht, wobei
eine Summe der jeweiligen gewünschten Mengen an Ladeleistung und/oder Ladestrom für den Satz von einer oder mehreren Elektrofahrzeug-Ladestationen geringer ist als die zuweisbare Menge, und wobei eine Differenz zwischen der zuweisbaren Menge und der genannten Summe geringer ist als die minimale Menge von zuzuweisender Ladeleistung und/oder Ladestrom, die mit der bestimmten Elektrofahrzeug-Ladestation verknüpft ist, wobei das Verfahren aufweist:
für zumindest eine Ladestation aus dem Satz von einer oder mehreren Elektrofahrzeug-Ladestationen, Zuweisen von weniger Ladeleistung und/oder Ladestrom an sie als ihre gewünschte Menge, und wobei das Verfahren weiterhin aufweist:
Zuweisen, an die besondere Elektrofahrzeug-Ladestation, zumindest der minimalen Menge von zuzuweisender Ladeleistung und/oder Ladestrom, die mit der besonderen Elektrofahrzeug-Ladestation verknüpft ist.

13. Datenverarbeitungssystem, mit
einem computerlesbaren Speichermedium, das einen damit verkörperten computerlesbaren Programmcode aufweist, und
einem Prozessor, vorzugsweise einem Mikroprozessor, der mit dem computerlesbaren Speichermedium gekoppelt ist, wobei in Antwort auf ein Ausführen des computerlesbaren Programmcodes der Prozessor dazu konfiguriert ist, das Verfahren nach einem oder mehreren der vorhergehenden Ansprüche 1-12 auszuführen.

14. Computerprogramm oder Suite von Computerprogrammen, mit zumindest einem Softwarecodeabschnitt oder Computerprogrammprodukt, das zumindest einen Softwarecodeabschnitt speichert, wobei der Softwarecodeabschnitt, wenn er auf einem Computersystem läuft, zum Ausführen des Verfahrens nach einem oder mehreren der Ansprüche 1-12 konfiguriert ist.

15. System zum Zuweisen von Ladeleistung und/oder Ladestrom an eine Mehrzahl von Elektrofahrzeug-Ladestationen, wobei das System ein Datenverarbeitungssystem aufweist, das dazu konfiguriert ist, das Verfahren nach einem oder mehreren der vorhergehenden Ansprüche 1-12 auszuführen.

## Revendications

1. Procédé d'attribution de puissance de recharge et/ou de courant de recharge à une pluralité de bornes de recharge de véhicule électrique, le procédé comprenant
une étape (i) de détermination d'un niveau de priorité pour chaque borne de recharge de véhicule électrique de la pluralité de bornes de recharge de véhicule électrique, en déterminant ainsi un premier groupe constitué d'une ou plusieurs bornes de recharge de véhicule électrique associé à un premier niveau de priorité et un second groupe constitué d'une ou plusieurs bornes de recharge de véhicule électrique associé à un second niveau de priorité, le premier niveau de priorité étant supérieur au second niveau de priorité, et **caractérisé par**
une étape (ii) de détermination d'un sous-niveau de priorité pour chacune des une ou plusieurs bornes de recharge de véhicule électrique dans le second groupe, en déterminant ainsi un ordre de priorité pour les une ou plusieurs bornes de recharge de véhicule électrique dans le second groupe, et
une étape (iii) d'attribution de puissance de recharge et/ou de courant de recharge à la pluralité de bornes de recharge de véhicule électrique conformément aux niveaux de priorité et sous-niveaux de priorité applicables, dans lequel une ou plusieurs bornes de recharge de véhicule électrique pénalisées dans le second groupe, pour lesquelles bornes de recharge un sous-niveau de priorité inférieur à un sous-niveau de priorité seuil a été déterminé, ont une puissance de recharge et/ou un courant de recharge limités, et
une étape (iv) de mise à jour de sous-niveaux de priorité pour les bornes de recharge de véhicule électrique dans le second groupe en déterminant ainsi un ordre de priorité mis à jour pour les une ou plusieurs bornes de recharge de véhicule électrique dans le second groupe, cette étape comprenant la détermination de sous-niveaux de priorité plus élevés pour les bornes de recharge de véhicule électrique pénalisées dans le second groupe que pour les véhicules électriques du second groupe ayant un sous-niveau de priorité égal ou supérieur audit sous-niveau de priorité seuil avant cette étape de mise à jour,
une étape (v) d'attribution de puissance de recharge et/ou de courant de recharge à la pluralité de bornes de recharge de véhicule électrique conformément aux niveaux de priorité et sous-niveaux de priorité applicables.

2. Procédé selon la revendication précédente, dans lequel l'attribution de la puissance de recharge et/ou du courant de recharge à la pluralité de bornes de recharge comprend la détermination pour chaque borne de recharge d'une quantité maximale de puissance de recharge et/ou de courant de recharge qui sera fournie à la borne de recharge.

3. Procédé selon la revendication 1 ou 2, dans lequel l'attribution de puissance de recharge et/ou de courant de recharge à la pluralité de bornes de recharge conformément aux niveaux de priorité déterminés comprend la prise en charge de chaque borne de recharge de véhicule électrique dans le premier groupe avec une priorité plus élevée que tout véhicule électrique dans le second groupe et la prise en charge des véhicules électriques dans le second groupe avec une priorité conformément à leurs sous-niveaux de priorité déterminés respectifs.

4. Procédé selon la revendication 1, 2 ou 3, comprenant au moins l'une parmi
après l'étape (iii), la mise à jour de niveaux de priorité pour des bornes de recharge de véhicule électrique parmi la pluralité de bornes de recharge de véhicule électrique, en mettant ainsi à jour le premier et le second groupe de bornes de recharge de véhicule électrique ; et
la détermination d'un sous-niveau de priorité pour chacune des une ou plusieurs bornes de recharge de véhicule électrique dans le premier groupe, en déterminant ainsi un ordre de priorité pour les une ou plusieurs bornes de recharge de véhicule électrique dans le premier groupe ; et
la répétition de l'étape (iv) et la répétition de l'étape (v) .

5. Procédé selon une ou plusieurs des revendications précédentes, comprenant le fait d'amener une puissance de recharge et/ou un courant de recharge à être fournis à la pluralité de bornes de recharge de véhicule électrique conformément à la puissance de recharge et/ou au courant de recharge attribués.

6. Procédé selon une ou plusieurs des revendications précédentes, dans lequel
l'étape (ii) comprend la détermination d'un premier sous-niveau de priorité particulier pour une première borne de recharge de véhicule électrique particulière dans le second groupe et la détermination d'un deuxième sous-niveau de priorité particulier pour une deuxième borne de recharge de véhicule électrique particulière dans le second groupe, le premier sous-niveau de priorité particulier étant supérieur au deuxième sous-niveau particulier, le premier sous-niveau de priorité particulier et le deuxième sous-niveau de priorité particulier étant tous deux inférieurs audit sous-niveau de priorité seuil, et dans lequel
l'étape (iv) comprend la détermination d'un sous-niveau de priorité plus élevé pour la première borne de recharge de véhicule électrique particulière que pour le deuxième véhicule électrique particulier.

7. Procédé selon une ou plusieurs des revendications précédentes, dans lequel
l'étape (ii) comprend la détermination d'un troisième sous-niveau de priorité particulier pour une troisième borne de recharge de véhicule électrique particulière dans le second groupe et la détermination d'un quatrième sous-niveau de priorité particulier pour une quatrième borne de recharge de véhicule électrique particulière dans le second groupe, le troisième sous-niveau de priorité particulier étant égal ou supérieur au quatrième sous-niveau particulier, le troisième sous-niveau de priorité particulier et le quatrième sous-niveau de priorité particulier étant tous deux supérieurs ou égaux audit sous-niveau de priorité seuil, et dans lequel
l'étape (iv) comprend la détermination d'un sous-niveau de priorité plus élevé pour la troisième borne de recharge de véhicule électrique particulière que pour le quatrième véhicule électrique particulier.

8. Procédé selon une ou plusieurs des revendications précédentes, comprenant
la réception d'une demande utilisateur comprenant une indication d'une borne de recharge de véhicule électrique particulière, et
sur la base de la demande utilisateur, la détermination du premier niveau de priorité pour la borne de recharge de véhicule électrique particulière, en assignant ainsi la borne de recharge de véhicule électrique particulière au premier groupe constitué d'une ou plusieurs bornes de recharge de véhicule électrique.

9. Procédé selon une ou plusieurs des revendications précédentes, comprenant
l'obtention d'une quantité attribuable de puissance de recharge et/ou de courant de recharge pour la pluralité de bornes de recharge de véhicule électrique, et
l'obtention, pour chaque borne de recharge de véhicule électrique parmi la pluralité de bornes de recharge de véhicule électrique, d'une quantité souhaitée de puissance de recharge et/ou de courant de recharge, dans lequel
les niveaux de priorité et sous-niveaux de priorité applicables définissent un ordre de priorité pour la pluralité de bornes de recharge de véhicule électrique, et dans lequel
l'attribution de puissance de recharge et/ou de courant de recharge à la pluralité de bornes de recharge de véhicule électrique conformément aux niveaux de priorité et sous-niveaux de priorité applicables comprend l'attribution, par ordre de priorité, de la quantité souhaitée de puissance de recharge et/ou de courant de recharge à chaque borne de recharge de véhicule électrique jusqu'à ce que la quantité attribuable ait été sensiblement attribuée.

10. Procédé selon la revendication précédente, dans lequel l'obtention de la quantité attribuable de puissance de recharge et/ou de courant de recharge comprend la détermination de la quantité attribuable sur la base d'un temps courant.

11. Procédé selon une ou plusieurs des revendications précédentes, dans lequel
chacune des bornes de recharge de véhicule électrique est associée à une quantité minimale de puissance de recharge et/ou de courant de recharge à attribuer et dans lequel le procédé comprend
l'attribution à chaque borne de recharge de véhicule électrique d'une puissance de recharge et/ou d'un courant de recharge sensiblement nuls, par exemple aucune puissance de recharge et/ou aucun courant de recharge, ou d'une quantité de puissance de recharge et/ou de courant de recharge qui est égale ou supérieure à sa quantité minimale associée de puissance de recharge et/ou de courant de recharge à attribuer.

12. Procédé selon la revendication précédente, comprenant en outre
l'obtention d'une quantité attribuable de puissance de recharge et/ou de courant de recharge pour la pluralité de bornes de recharge de véhicule électrique, et
l'obtention, pour chaque borne de recharge de véhicule électrique parmi la pluralité de bornes de recharge de véhicule électrique, d'une quantité souhaitée de puissance de recharge et/ou de courant de recharge, dans lequel
les niveaux de priorité et sous-niveaux de priorité applicables définissent un ordre de priorité pour la pluralité de bornes de recharge de véhicule électrique, dans lequel, dans l'ordre de priorité, une borne de recharge de véhicule électrique particulière est précédée d'un ensemble constitué d'une ou plusieurs bornes de recharge de véhicule électrique, dans lequel
une somme des quantités respectives souhaitées de puissance de recharge et/ou de courant de recharge pour l'ensemble constitué d'une ou plusieurs bornes de recharge de véhicule électrique est inférieure à la quantité attribuable et dans lequel une différence entre la quantité attribuable et ladite somme est inférieure à la quantité minimale de puissance de recharge et/ou de courant de recharge à attribuer associée à ladite borne de recharge de véhicule électrique particulière, le procédé comprenant pour au moins une borne de recharge parmi l'ensemble constitué d'une ou plusieurs bornes de recharge de véhicule électrique, l'attribution d'une puissance de recharge et/ou d'un courant de recharge inférieurs à sa quantité souhaitée, et le procédé comprenant en outre
l'attribution à la borne de recharge de véhicule électrique particulière d'au moins la quantité minimale de puissance de recharge et/ou de courant de recharge à attribuer associée à la borne de recharge de véhicule électrique particulière.

13. Système de traitement de données comprenant
un support de stockage lisible par ordinateur ayant un code de programme lisible par ordinateur incorporé dans celui-ci, et
un processeur, de préférence un microprocesseur, couplé au support de stockage lisible par ordinateur, dans lequel, en réponse à l'exécution du code de programme lisible par ordinateur, le processeur est configuré pour réaliser le procédé selon une ou plusieurs des revendications 1 à 12 précédentes.

14. Programme informatique ou séquence de programmes informatiques comprenant au moins une partie de code logiciel ou un produit programme informatique stockant au moins une partie de code logiciel, la partie de code logiciel, lorsqu'elle est mise en œuvre sur un système informatique, étant configurée pour exécuter le procédé selon une ou plusieurs des revendications 1 à 12.

15. Système d'attribution de puissance de recharge et/ou de courant de recharge, à une pluralité de bornes de recharge de véhicule électrique, le système comprenant un système de traitement de données configuré pour exécuter le procédé selon une ou plusieurs des revendications 1 à 12 précédentes.
